# EUROPÄISCHE PATENTSCHRIFT

(11) **EP 2 977 730 B1**
(45) Veröffentlichungstag und Bekanntmachung des Hinweises auf die Patenterteilung: **22.01.2020**
(21) Anmeldenummer: 15176134.3
(22) Anmeldetag: 09.07.2015
(51) Int. Cl.: G01F 23/00, G01F 23/26, G01N 35/10

(54) **VERFAHREN UND VORRICHTUNG ZUM UNTERSCHEIDEN ZWISCHEN EINER SCHAUM- UND/ODER FLÜSSIGKEITSKONTAKTIERUNG**
METHOD AND DEVICE FOR DISTINGUISHING BETWEEN A FOAM AND/OR LIQUID CONTACTING
PROCEDE ET DISPOSITIF DESTINE A DIFFERENCIER ENTRE UNE MISE EN CONTACT DE LIQUIDE ET/OU DE MOUSSE

(30) Priorität: 24.07.2014 CH 11292014
(43) Veröffentlichungstag der Anmeldung: 27.01.2016
(73) Patentinhaber: Tecan Trading AG, 8708 Männedorf (CH)
(72) Erfinder: OTT, Philipp, 8496 Steg im Tösstal (CH); KAMM, Lars, 9718 Schänis (CH); SCHÖNI, MARKUS, 8606 Nänikon (CH); KELLER, Remo, 8640 Rapperswil (CH); ZBINDEN, Paul, 8633 Wolfhausen (CH)
(74) Vertreter: OK pat AG

(56) Entgegenhaltungen:
- EP-A2- 1 048 953
- CH-A1- 702 427
- DE-A1- 10 157 762
- US-A1- 2007 144 253
- US-A1- 2011 000 296

## Beschreibung

Die Erfindung betrifft ein Verfahren und eine Vorrichtung zum Unterscheiden zwischen einer Kontaktierung eines Fühlers mit Schaum oder Flüssigkeit in einem Flüssigkeitsbehälter.

### HINTERGRUND DER ERFINDUNG

Es gibt zahlreiche Laborsysteme und medizinische, sowie pharmazeutische Geräte, die präzise Pipettieroperationen erfordern, um zufriedenstellende analytische Genauigkeit zu erhalten. Dafür muss der Füllstand in Reagenzgläsern, Titerplatten und anderen Flüssigkeitsbehältern genau ermittelt werden. Es gibt auch Anwendungen, bei denen es um die Detektion von Schaum-Flüssig-Phasengrenzen geht. Im Folgenden wird der Begriff der Phasengrenze sowohl für Übergänge zwischen gasförmigen und flüssigen Medien (Gas-Flüssig-Phasengrenze) als auch für Übergänge zwischen verschiedenen flüssigen Medien (Schaum-Flüssig-Phasengrenze) verwendet.

Besonders wenn es um die Automation von Mess- oder Versuchsabläufen geht, ist eine solche Ermittlung der Phasengrenze von Bedeutung. Die sogenannte Füllstandsermittlung erfolgt typischerweise mittels einer Detektion des Flüssigkeitsniveaus, d.h. es wird die Lage der Phasengrenze zwischen Luft und Flüssigkeit ermittelt. Dieser Vorgang wird auch als "Liquid Level Detection" (LLD) bezeichnet.

Im Stand der Technik sind verschiedene Verfahren zur Füllstandsermittlung bekannt, die auf unterschiedliche physikalische Prinzipien basieren, wie z.B. die Detektion des von der Oberfläche der Flüssigkeit reflektierten Lichts, oder die Messung elektrischer Eigenschaften der Pipetten, wenn sie in Kontakt mit der Flüssigkeit gebracht werden. Da ein Gas und eine Flüssigkeit deutlich unterschiedliche Dielektrizitätskonstanten besitzen, kann die Gas-Flüssig-Phasengrenze auch über eine Kapazitätsänderung bestimmt werden.

Die Liquid Level Detection kommt z.B. in Pipettiergeräten zum Einsatz. Hier soll beim Ansaugen mit einer Pipette die Pipettiernadel so gering wie möglich in die zu pipettierende Flüssigkeit eingetaucht werden, um eine Verschmutzung mit Probenflüssigkeit so gering wie möglich zu halten. Beim Ansaugen wird die Pipettiernadel deshalb typischerweise nur wenige Millimeter unter das Flüssigkeitsniveau eingetaucht. Es muss aber sichergestellt werden, dass die Pipettiernadel genügend weit eingetaucht ist und damit keine Luft angesaugt werden kann. Während des Ansaugvorganges wird die Pipettiernadel dann kontinuierlich dem absinkenden Flüssigkeitsspiegel nachgeführt, damit sie immer gleich tief in Bezug zum Flüssigkeitsniveau eingetaucht bleibt. Nach dem Ansaugen kann z.B. anhand des angesaugten Volumens und der Querschnittsfläche des Flüssigkeitsbehälters berechnet werden, auf welcher Höhe sich die Gas-Flüssig-Phasengrenze befinden sollte. Beim Austauchen der Pipettenspitze kann ein Austauchsignal mit der errechneten Position der Gas-Flüssig-Phasengrenze verglichen werden, um so den Pipettiervorgang zu verifizieren.

Einerseits ist also wünschenswert, die Pipettierspitze knapp unter der Flüssigkeitsoberfläche zu positionieren, anderseits kann der Füllstand von einem Flüssigkeitsbehälter zu einem anderen stark variieren, weshalb die Pipettierspitze präzise positionierbar sein muss. Dafür ist es äusserst wichtig, die Flüssigkeitsoberfläche richtig detektieren zu können.

Die Zuverlässigkeit der Erkennung der Flüssigkeitsoberfläche mit den bekannten Verfahren ist aber in einigen Fällen nicht befriedigend, insbesondere im Fall von Flüssigkeiten, die anfällig sind für Schaumbildung.

Dafür ist es wichtig, zwischen einer Schaum- und/oder Flüssigkeitskontaktierung eines in einem Flüssigkeitsbehälter zustellbaren Fühlers unterscheiden zu können.

Aus dem Dokument EP 1 048 953 A1 ist eine Flüssigkeitstransfereinrichtung und ein Verfahren bekannt, mit welchen zunächst kapazitiv eine Flüssigkeitsoberfläche erkannt wird, und dann in einem nachgeschalteten Schritt angesaugt und an einer separaten Detektionsstrecke innerhalb einer Kanüle anhand einer Leitfähigkeitsmessung bestimmt wird, ob Flüssigkeit oder Schaum angesaugt wurde.

### AUFGABE DER ERFINDUNG

Es stellt sich daher die Aufgabe, ein Verfahren zum Unterscheiden zwischen einer Kontaktierung eines bewegbaren Fühlers mit Schaum oder mit Flüssigkeit in einem Flüssigkeitsbehälter eines (Labor-)Geräts bereitzustellen, das jederzeit ein sicheres Detektieren mindestens einer Schaum-Phasengrenze ermöglicht.

Eine weitere Aufgabe der Erfindung ist, ein Verfahren für eine Detektion des Übergangs des Fühlers von Schaum zu Flüssigkeit bereitzustellen.

Eine weitere Aufgabe der Erfindung ist das Bereitstellen entsprechender Vorrichtungen.

### OFFENBARUNG DER ERFINDUNG

Die oben identifizierte technische Aufgabe der Erfindung wird durch ein Verfahren
- zum Erkennen einer Kontaktierung eines bewegbaren Fühlers mit Schaum oder Flüssigkeit gelöst, und
- zum Unterscheiden zwischen einer Kontaktierung eines bewegbaren Fühlers mit Schaum oder mit Flüssigkeit in einem Flüssigkeitsbehälter gelöst.

In beiden Fällen kommt eine kapazitiv arbeitende Messvorrichtung zum Einsatz, die mit einem auf und ab bewegbaren Fühler verbindbar ist. Beim Bewegen des Fühlers wird mindestens ein Ausgangsignal durch die Messvorrichtung verarbeitet. Das erfindungsgemässe Verfahren umfasst die folgenden Schritte, die nicht notwendigerweise hintereinander ausgeführt werden müssen:
a. Ausführen einer Auf- oder Abwärtsbewegung des Fühlers in dem Flüssigkeitsbehälter;
b. Anlegen eines Eingangssignals mit einer ersten Frequenz an den Fühler;
c. Anlegen des Eingangssignals mit einer zweiten Frequenz an den Fühler, wobei die zweite Frequenz und die erste Frequenz unterschiedlich sind;
d. Im Rahmen eines ersten Prozesses - Auswerten des Ausgangssignals, um einen ersten Sprung des Ausgangssignals zu erkennen;
e. im Rahmen eines zweiten Prozesses - Auswerten des Ausgangssignals, um einen zweiten Sprung des Ausgangssignals zu erkennen;
f. Vergleichen des ersten Sprungs mit dem zweiten Sprung;
g. Falls das Vergleichen eine Vorgabe übersteigt, Ausgabe einer Kennung, die eine Kontaktierung des Fühlers mit Schaum in dem Flüssigkeitsbehälter signalisiert.

Vorzugsweise wird bei allen Ausführungsformen beim Vergleichen im Schritt f. der Quotient des ersten Sprungs und des zweiten Sprungs ermittelt und im Schritt g. wird die Kennung ausgegeben, falls der Quotient einen Faktor übersteigt. Der Faktor entspricht hier der Vorgabe.

Vorzugsweise sind bei allen Ausführungsformen die Schritte b. und d. sowie die Schritte c. und e. miteinander korreliert, d.h. der erste Sprung steht mit der ersten Frequenz und der zweite Sprung mit der zweiten Frequenz in einem Zusammenhang.

Gemäss Erfindung kann anhand einer Betrachtung des/der Signalsprünge das Vorhandensein einer Phasengrenze erkannt werden. Das geschieht vorzugsweise bei allen Ausführungsformen im Rahmen des ersten und zweiten Prozesses. Vorzugsweise werden bei allen Ausführungsformen die Schritte f. und g. erst ausgeführt nachdem das Vorhandensein einer Phasengrenze erkannt wurde. Die Schritte f. und g. werden hier auch als dritter Prozess bezeichnet.

Die oben identifizierte weitere technische Aufgabe der Erfindung wird durch ein Verfahren gelöst, wobei nach Ausgabe der Kennung, die eine Kontaktierung des Fühlers mit Schaum signalisiert, die folgenden Schritte ausgeführt werden (diese weiteren Schritte sind optional):
a. Ausführen einer weiteren Bewegung des Fühlers in die zuvor ausgeführte Bewegungsrichtung;
b. Im Rahmen eines vierten Prozesses - Anlegen eines Eingangssignals an den Fühler und Auswerten des Ausgangssignals, um eine Schaum-Flüssigkeit Phasengrenze zu erkennen, und gegebenenfalls Ausgabe einer Kennung, die einen Übergang des Fühlers von Schaum in Flüssigkeit signalisiert.

Bei bevorzugten Ausführungsformen der Erfindung geht man wie folgt vor:
1. Phasengrenze zwischen Gas/Schaum oder Gas/Flüssigkeit detektieren (das erfolgt hier durch ein Ausführen des ersten und zweiten Prozesses).
2. Feststellen, ob in Flüssigkeit oder Schaum eingetaucht wurde. D.h., es wird in dieser Prozessphase eine Unterscheidung zwischen einer Gas/Schaum- und einer Gas/Flüssigkeits-Phasengrenze vorgenommen. Dies geschieht gemäss Erfindung durch ein Betrachten/Auswerten des Quotienten (das erfolgt hier durch ein Ausführen des dritten Prozesses).
3. (optional): Detektieren der Phasengrenze zwischen Schaum und Flüssigkeit, falls man unter Punkt 2. eine Gas/Schaum-Phasengrenze erkannt hat (das erfolgt hier durch ein Ausführen des vierten Prozesses).

Die technische Aufgabe der Erfindung wird auch durch eine Vorrichtung gelöst, deren Merkmale den entsprechenden Ansprüchen zu entnehmen sind.

### VORTEILHAFTE WIRKUNGEN

Der wichtigste Vorteil der Erfindung ist, dass bei der Zustellung eines Fühlers (z.B. in Form einer Pipette) zuverlässig zwischen Schaum- oder Flüssigkeitskontaktierung unterscheiden werden kann. Es kann damit sichergestellt werden, dass z.B. eine Füllstandsmessung korrekte Daten liefert und/oder dass z.B. ein Pipettiervorgang ohne die Gefahr durchgeführt werden kann, dass Luft angesaugt wird.

### KURZE BESCHREIBUNG DER ZEICHNUNGEN

Das erfindungsgemässe Verfahren wird nun an Hand von schematischen, den Umfang der Erfindung nicht beschränkenden Zeichnungen von beispielhaften Ausführungsformen im Detail erläutert. Dabei zeigen:
- Fig. 1: eine schematische Illustration des Detektionsverfahren gemäss der vorliegenden Erfindung, die eine Pipette in drei unterschiedlichen Zustell-Tiefen zeigt;
- Fig. 2: ein schematisches Schaltungsdiagramm einer ersten Ausführungsform eines Eingangssignalgenerators und einer kapazitiv arbeitenden Messvorrichtung gemäss der vorliegenden Erfindung;
- Fig. 3: ein schematisches Schaltungsdiagramm einer zweiten Ausführungsform des Eingangssignalgenerators und der kapazitiv arbeitenden Messvorrichtung gemäss der vorliegenden Erfindung.

### DETAILLIERTE BESCHREIBUNG DER BEVORZUGTEN AUSFÜHRUNGSFORMEN

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

Der Begriff Phasengrenze wird verwendet für Grenzen zwischen zwei oder mehr Medien, die unterschiedliche Dielektrizitätskonstanten besitzen. Speziell geht es um Flüssig-Flüssig und Gas-Flüssig Phasengrenzen.

Der Begriff Modul wird hier verwendet, um eine Funktionsgruppe zu umschreiben, die in Hardware, Software oder als Kombination aus Hard- und Software realisiert ist.

Der Begriff "Kennung" wird hier verwendet für einen Code, ein Codewort, ein Signal, eine Speichereintragung oder ein Flag, das gesetzt wird. Eine solche Kennung kann zum Beispiel eine logisch "0" oder eine logische "1" annehmen.

Im Zusammenhang mit der vorliegenden Erfindung ist verschiedentlich von Geräten 100 die Rede. Es handelt sich vorzugsweise um Laborgeräte, und um andere Systeme, Anlagen, Apparate, Handhabungszentren und dergleichen, die mit Mitteln zur Ermittlung einer Phasengrenze ausgestattet sind. Die erfindungsgemässe Vorrichtung ist ein Element oder eine Komponente eines solchen Laborgeräts. Ein Laborgerät 100 kann zum Beispiel mehrere identische Vorrichtungen oder mehrere verschiedene Vorrichtungen umfassen.

Das erfindungsgemässe Verfahren ist vorzugsweise bei allen Ausführungsformen zum Unterscheiden zwischen einer Schaum- oder Flüssigkeitskontaktierung eines Fühlers 3 (z.B. einer als Fühler dienenden Pipette) in einem Flüssigkeitsbehälter 5 ausgelegt. Im Folgenden wird auf die Verwendung von Pipetten Bezug genommen, wobei auch andere (Pipetten-) Spitzen, Nadeln, Röhrchen und dergleichen als Fühler 3 geeignet sind und im Rahmen der Erfindung eingesetzt werden können.

Im Folgenden wird auf das Ausführen einer Zustellbewegung Bezug genommen. Eine solche Zustellbewegung kann eine Abwärts- oder eine Aufwärtsbewegung des Fühlers 3 in dem Flüssigkeitsbehälter 5 beschreiben.

Zum Zweck des Detektierens wird vorzugsweise eine Pipette 3 verwendet, die in Richtung der Flüssigkeit 1 im Flüssigkeitsbehälter 5 zustellbar ist.

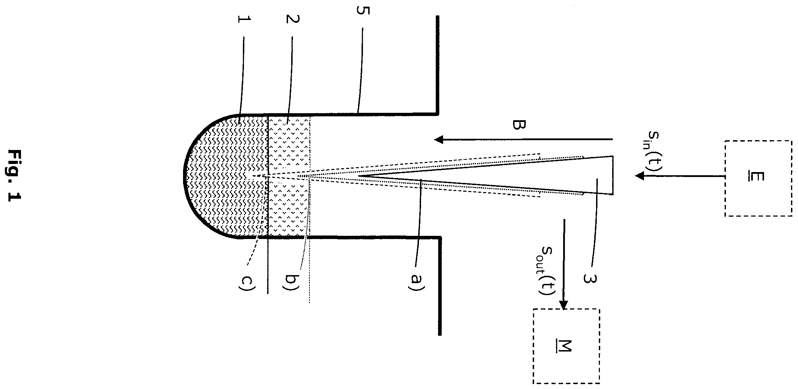

Fig. 1 stellt eine schematische Illustration des Detektionsverfahrens gemäss der vorliegenden Erfindung dar, worin die Pipette 3 in drei unterschiedlichen Zustell-Tiefen entlang der Zustellrichtung B gezeigt ist, nämlich: a) vor dem Eintauchen in die Flüssigkeit 1/den Schaum 2; b) beim Eintauchen in Schaum 2; und c) beim Eintauchen in Flüssigkeit 1. Während der Zustellbewegung B der Pipette 3 in Richtung der Flüssigkeit 1 und/oder des Schaumes 2 wird ein Eingangssignal sᵢₙ(t) an die Pipette 3 angelegt. Wenn die Spitze der Pipette 3 die Flüssigkeit/Schaum-Oberfläche berührt, verschwindet die Kapazität zwischen der Pipette 3 und der Flüssigkeit 1 bzw. dem Schaum 2 schlagartig. Das führt zu einem auswertbaren Sprung der Gesamtkapazität. Die Pipette 3 dient dabei quasi als eine Messelektrode einer Messvorrichtung M. An der Pipette 3 kann ein Ausgangssignal sₒᵤₜ(t) abgegriffen werden. Das Anlegen des Eingangssignals sᵢₙ(t) und das Abgreifen des Ausgangssignals sₒᵤₜ(t) ist in Fig. 1 schematisch angedeutet.

Diese Aspekte werden im Folgenden anhand spezifischer Ausführungsformen detailliert beschrieben.

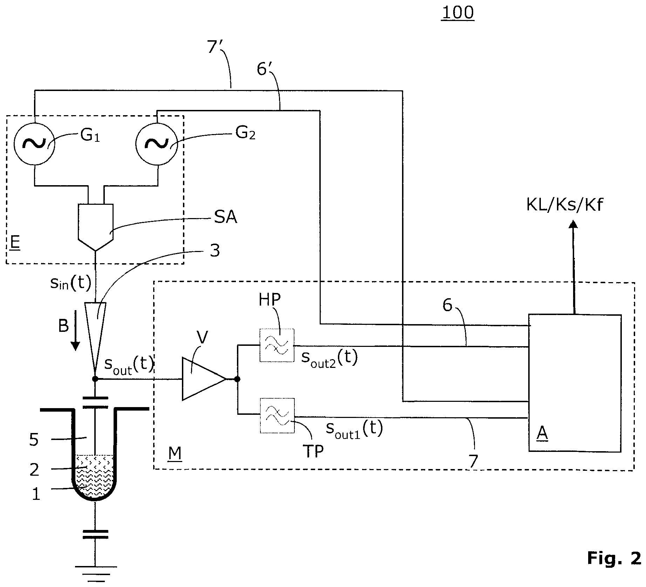

Fig. 2 zeigt ein schematisches Schaltungsdiagramm einer ersten Ausführungsform des Eingangssignalgenerators E und der kapazitiv arbeitenden Messvorrichtung M gemäss der vorliegenden Erfindung. Die Pipette 3 bildet einen Kondensator zusammen mit der Schaum/Flüssigkeitsoberfläche, wobei die Luft das Dielektrikum zwischen den Platten dieses Kondensators bildet. Die Spitze der Pipette 3 bildet quasi den ersten Teil eines Messkondensators mit zwei Kondensatorplatten, die Flüssigkeits- oder Schaumoberfläche den zweiten Teil mit einem dazwischen liegenden Luft-Dielektrikum, wobei je nach Position der Pipette 3 der Plattenabstand der Kondensatorplatten veränderlich ist. Beim Berühren der Schaum/Flüssigkeitsoberfläche mit der Spitze der Pipette 3 ergibt sich der erwähnte Sprung der Gesamtkapazität.

Der Eingangssignalgenerator E umfasst beispielsweise einen ersten Wechselspannungsgenerator G₁ zum Erzeugen einer ersten Spannungskomponente bzw. einen zweiten Wechselspannungsgenerator G₂ zum Erzeugen einer zweiten Spannungskomponente. Die ersten und zweiten Spannungskomponenten sind vorzugsweise sinusförmig.

In einer bevorzugten Ausführungsform der Erfindung wird mittels des ersten Wechselspannungsgenerators G₁ bzw. des zweiten Wechselspannungsgenerators G₂ ein erstes Sinussignal S₁ mit einer ersten Frequenz f₁ und ein zweites Sinussignal S₂ mit einer zweiten Frequenz f₂ als Eingangssignal sᵢₙ(t) an die Pipette 3 angelegt, wobei sich diese beiden Frequenzen f₁ und f₂ unterscheiden.

Die (Basis-)Frequenz f₁ liegt vorzugsweise bei allen Ausführungsformen im Bereich zwischen 10kHz und 1MHz. Die (Schaum-)Frequenz f₂ liegt vorzugsweise bei allen Ausführungsformen um den Faktor 5 bis 100 höher als die Frequenz f₁.

Ein optionaler Spannungsaddierer SA ist für die Überlagerung der ersten S₁ bzw. zweiten Sinussignals S₂ vorgesehen. Der erste Wechselspannungsgenerator G₁ und der zweite Wechselspannungsgenerator G₂ sowie der Spannungsaddierer SA können, zumindest funktionell, zu einem Eingangssignalgenerator E zusammengefasst werden, der eine resultierende, aus zwei Wechselspannungskomponenten zusammengesetzte Wechselspannung erzeugt. Die resultierende Wechselspannung wird als Eingangssignal sᵢₙ(t) an den Fühler 3 (die Pipette 3) angelegt, der bei allen Ausführungsformen als Messelektrode dient.

Selbstverständlich können auch andere, an sich bekannte Arten von Spannungsgeneratoren 4 für das erfindungsgemässe Verfahren verwendet werden. So ist es nicht unbedingt nötig, zwei sinusförmige Wechselspannungskomponenten mit zwei Teilwechselspannungsgeneratoren G₁, G₂ zu erzeugen. Alternativ kann z.B. eine Wechselspannung in Form von anderen periodischen Signalen erzeugt werden.

Während das Eingangssignal sᵢₙ(t) von dem Eingangssignalgenerator E an den Fühler 3 angelegt wird, wird das Ausgangssignal sₒᵤₜ(t) des Fühlers 3 mittels einer Auswerteschaltung A verarbeitet/ausgewertet, um eine Kapazitätsänderung und/oder Impedanzänderung zu detektieren. Dafür ist die Auswerteschaltung A dem Fühler 3 nachgeschaltet, d.h. die Auswerteschaltung A ist bei allen Ausführungsformen schaltungstechnisch mit dem Fühler 3 verbindbar. Im Ausführungsbeispiel von Fig. 2 beinhaltet die Auswerteschaltung A, respektive die Messvorrichtung M zunächst einen Verstärker V zur Verstärkung des Ausgangssignals sₒᵤₜ(t).

Das Ausgangssignal des Verstärkers V wird hier beispielsweise einer Frequenzweiche zugeführt, welche das Ausgangssignal sₒᵤₜ(t) in eine - der ersten Frequenz f₁ entsprechende - erste Ausgangssignalkomponente sₒᵤₜ₁(t) und eine - der zweiten Frequenz f₂ entsprechende - zweite Ausgangssignalkomponente sₒᵤₜ₂(t) aufgeteilt und diese Komponenten auf einen ersten Signalpfad 6 bzw. einen zweiten Signalpfad 7 führt. Dies kann z. B. mit einem Hochpassfilter HP und einem Tiefpassfilter TP bewerkstelligt werden, die Teile der Frequenzweiche sein können. Die Frequenz f₁, die dem Generator G₁ zugeordnet ist, ist eine tiefere Frequenz als die Frequenz f₂. Eine Demodulation kann im Wesentlichen synchron, als eine Multiplikation der Teilsignalkomponenten mit der an der Pipette 3 angelegten ersten Spannungskomponente (vom Wechselspannungsgenerator G₁₎ bzw. einer zweiten Spannungskomponente (vom zweiten Wechselspannungsgenerator G₂) ausgeführt werden. Die Demodulation kann z.B. in einer Auswerteschaltung A erfolgen, der die Signale zugeführt werden, wie in Fig. 2 gezeigt. Das Zuführen der ersten Spannungskomponente und der zweiten Spannungskomponente kann beispielsweise über Signalpfade 6' und 7' erfolgen.

Vorzugsweise werden bei allen Ausführungsformen der Erfindung die erste Ausgangssignalkomponente sₒᵤₜ₁(t) im Rahmen eines ersten Prozesses P₁ und die zweite Ausgangssignalkomponente sₒᵤₜ₂(t) im Rahmen eines zweiten Prozesses P₂ - vorzugsweise simultan - ausgewertet. Dieses Auswerten kann bei allen Ausführungsformen in der Auswerteschaltung A erfolgen. Als Ergebnis gibt die Auswerteschaltung A eine Kennung KL heraus, bzw. sie stellt eine Kennung KL bereit, die von einer anderen Schaltung oder einem Computer abgerufen werden kann. Die Kennung KL zeigt an, dass eine Phasengrenze zwischen Luft und einem dichteren Medium (Schaum 2 oder Flüssigkeit 1) detektiert wurde.

Nachdem eine solche Phasengrenze detektiert wurde, können weitere Prozesse folgen.

Vorzugsweise wird bei allen Ausführungsformen der Erfindung nach dem Detektieren einer solchen Phasengrenze ein dritter Prozess P₃ ausgeführt, um eine Unterscheidung treffen zu können ob es sich um eine Luft/Flüssigkeits- oder Luft/Schaum-Phasengrenze handelt.

Vorzugsweise wird bei allen Ausführungsformen der Erfindung im Rahmen des dritten Prozesses P₃ ein erster Signalsprung mit einem zweiten Signalsprung in Relation gesetzt bzw. die beiden Sprünge werden miteinander verglichen (z.B. durch das Bilden eines Quotienten Q). Der erste Signalsprung ist dabei mit der ersten Frequenz f₁ und der zweite Signalsprung mit der zweiten Frequenz f₂ korreliert. Als Ergebnis gibt die Auswerteschaltung A beispielsweise eine Kennung Ks oder Kf heraus, bzw. sie stellt eine Kennung Ks oder Kf bereit, die von einer anderen Schaltung oder einem Computer abgerufen werden kann. Das Bereitstellen der entsprechenden Kennungen ist in Fig. 2 durch einen Pfeil mit dem Bezugszeichen KL/Ks/Kf symbolisiert.

Diese Kennungen können bei allen Ausführungsformen auch an separaten Ausgängen der Auswerteschaltung A bereitgestellt werden.

Die Auswerteschaltung A kann bei allen Ausführungsformen eine analoge elektrische Schaltung und/oder eine digitale Schaltung mit einem Prozessor beinhalten.

Die Auswerteschaltung A kann bei allen Ausführungsformen einen Schaltungsblock für den ersten und zweiten Prozess Pi, P₂ und einen Schaltungsblock für den dritten Prozess P₃ umfassen. Diese Schaltungsblöcke können aber auch schaltungstechnisch zusammengefasst sein.

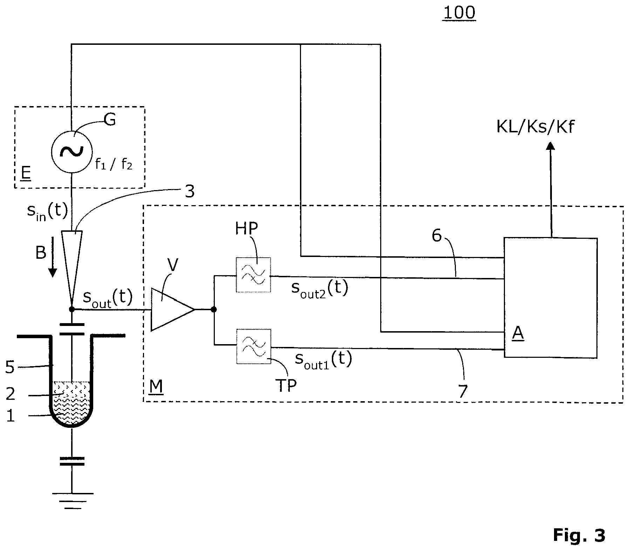

Fig. 3 zeigt ein schematisches Schaltungsdiagramm einer zweiten Ausführungsform des Eingangssignalgenerators E gemäss der vorliegenden Erfindung. Der Unterschied zur ersten Ausführungsform von Fig. 2 besteht darin, dass das Eingangssignalgenerator E nur einen einzigen Wechselspannungsgenerator G umfasst, wobei ein erstes Sinussignal S₁ und ein zweites Sinussignal S₂ alternierend als Eingangssignal sᵢₙ(t) quasi-simultan an den Fühler 3 angelegt werden. Dementsprechend kann das Ausgangssignal sₒᵤₜ(t) bei der ersten Frequenz f₁ oder der zweiten Frequenz f₂ alternierend im Rahmen des ersten Prozesses P₁ oder des zweiten Prozesses P₂ quasi-simultan ausgewertet werden.

Zusammenfassend kann festgehalten werden, dass während des Ausführens einer Abwärts- oder Aufwärtsbewegung des Fühlers 3 ein Eingangssignal sᵢₙ(t) an den Fühler 3 angelegt wird. Zu diesem Zweck ist bei allen Ausführungsformen der Fühler 3 mit einer der beispielhaft gezeigten Eingangssignalgeneratoren E verbindbar. Während des Ausführens der Bewegung B wird ermittelt, ob sich im Ausgangssignal sₒᵤₜ(t) ein Sprung ergibt. Im Rahmen eines ersten Prozesses P₁ wird dabei ermittelt, ob ein Sprung ΔX1 auftritt. Dabei geht es um einen Sprung ΔX1 des Ausgangssignals sₒᵤₜ(t). Wenn kein Sprung ΔX1 vorliegt (oder falls der Sprung nicht grösser ist als ein Sprungfaktor SF), so wird das Bewegen des Fühlers 3 weiter fortgesetzt. Die Bewegungsrichtung der Bewegung B bleibt die gleiche und das Ermitteln ob ein Sprung ΔX1 auftritt, wird fortgesetzt. Das Vorliegen eines solchen Sprungs ΔX1 zeigt eine Phasengrenze an, wobei in diesem Moment noch nicht erkannt werden kann, ob es sich um eine Luft/Schaum- oder eine Luft/Flüssigkeits-Phasengrenze handelt.

Im Rahmen eines zweiten Prozesses P2 wird ermittelt, ob ein Sprung ΔX2 auftritt. Dabei geht es um einen Sprung ΔX2 des Ausgangssignals sₒᵤₜ(t). Der Prozess P2 kann simultan zum Prozess P1 oder zeitlich nach dem Prozess P1 ausgeführt werden. Die beiden Prozesse P1, P2 können einander auch zeitlich überlappen. Das Vorliegen eines solchen Sprungs ΔX2 zeigt eine Phasengrenze an, wobei in diesem Moment noch nicht erkannt werden kann, ob es sich um eine Luft/Schaum- oder eine Luft/Flüssigkeits-Phasengrenze handelt.

Um zusätzliche Sicherheit zu erhalten, können alle Ausführungsformen die Detektion einer Phasengrenze erst dann ausgeben, wenn zwei Sprünge ΔX1 und ΔX2 vorliegen. Es langt aber auch das Betrachten nur eines Sprungs ΔX1 oder ΔX2. Beim Erkennen einer solchen Phasengrenze kann die Kennung KL ausgegeben werden, wie bereits beschrieben.

Vorzugsweise wird bei allen Ausführungsformen, die sich mit dem Erkennen von Schaum befassen, erst dann das genauere Untersuchen des/der Sprünge vorgenommen, wenn ein erster Sprung ΔX1 und ein zweiter Sprung ΔX2 erkannt wurden. Das genauere Untersuchen dient dazu eine Schaumgrenze von einer Flüssigkeitsgrenzen unterscheiden zu können. Im Zusammenhang mit dem entsprechenden dritten Prozess P₃ werden die beiden Sprünge ΔX1 und ΔX2 miteinander in Bezug gesetzt bzw. miteinander verglichen (vorzugsweise durch das Bilden eines Quotienten Q).

Um die Detektionsgenauigkeit zu verbessern (z.B. indem Signalrauschen von wirklichen Ereignissen unterschieden werden kann), kann ein Sprungfaktor SF vorgegeben werden, der von der Auswerteschaltung A eingesetzt wird, um eine sprunghafte Änderung des Ausgangssignals sₒᵤₜ(t) als Sprung ΔX1 oder ΔX2 im Sinne der Erfindung einstufen zu können. Eine der Schaltungen E oder A kann bei allen Ausführungsformen einen Speicher zum Vorgeben des Sprungfaktors SF umfassen.

Im Rahmen des genaueren Untersuchens (d.h. im dritten Prozess P₃) wird vorzugsweise bei allen Ausführungsformen ein Quotient Q aus dem ersten Sprung ΔX1 und dem zweiten Sprung ΔX2 ermittelt. Dieser Quotient Q wird verarbeitet/ausgewertet, um eine Schaumkontaktierung erkennen zu können. Falls der Quotient Q einen Faktor F übersteigt, wird eine Kennung Ks ausgegeben, die eine Kontaktierung des Fühlers 3 mit Schaum 2 in dem Flüssigkeitsbehälter 5 signalisiert. Das rechnerische oder signaltechnische Bilden des Quotienten Q ist vorzugsweise bei allen Ausführungsformen in der Auswerteschaltung A implementiert. Der Faktor F dient hier als Vorgabe(-grösse).

Anstatt bei allen Ausführungsformen mit zwei verschiedenen Kennungen Kf und Ks zu arbeiten, kann auch eine einzige Kennung ausgegeben werden, die z.B. logisch "1" ist wenn Schaum 2 vorliegt und die logisch "0" ist, falls kein Schaum vorliegt.

Falls die Kontaktierung des Fühlers 3 mit Schaum 2 erkannt wurde, kann optional bei allen Ausführungsformen eine weitere "Untersuchung" folgen während der Fühler 3 weiter in die vorherige Richtung bewegt wird, um eine nachfolgende (beim Abwärtsbewegen unterhalb des Schaumes 2 liegende oder beim Aufwärtsbewegen oberhalb des Schaumes 2 liegende) Flüssigkeitsgrenze erkennen zu können.

Es können optional bei allen Ausführungsformen charakteristische Grössen aus dem Ausgangssignal sₒᵤₜ(t) ermittelt oder abgeleitet werden. Dabei können z.B. ein erster Phasenwinkel PH1 und ein zweiter Phasenwinkel PH2, respektive eine Phasenverschiebung Δϕ ermittelt (z.B. auf rechnerischem Wege). Dann wird untersucht, ob der Betrag des ersten Phasenwinkels PH1 minus des zweiten Phasenwinkels PH2 (d.h. die Phasenverschiebung Δϕ) kleiner ist als ein Faktor, der vorgegeben ist. Falls dies der Fall ist, dann wurde eine Flüssigkeitsgrenze detektiert. Ansonsten kann das genauere Untersuchen während des Weiterbewegens des Fühlers 3 fortgesetzt werden, bis auf dem genannten Wege eine Flüssigkeitsgrenze detektiert wurde. Das rechnerische oder signaltechnische Verarbeiten des/der Phasenwinkel PH1, PH2 ist vorzugsweise bei allen Ausführungsformen in der Auswerteschaltung A implementiert.

Das Auswerten nach der Detektion von Schaum 2 kann bei allen Ausführungsformen auch die Erkennung eines Widerstandssprungs ΔR umfassen, der beim Übergang des Fühlers 3 von Schaum 2 in Flüssigkeit 1 auftritt. Dieser Widerstandssprung ΔR kann durch Auswerten/Verarbeiten des Ausgangssignals sₒᵤₜ(t) ermittelt werden.

Bei allen Ausführungsformen der Erfindung kann das Auswerten des Ausgangssignals sₒᵤₜ(t) zeitgleich (quasi in Echtzeit) mit dem Bewegen B des Fühlers 3 erfolgen.

Bei allen Ausführungsformen der Erfindung kann das Schaltungsprinzip, das allen Schaltungen gemäss der Figuren 2 und 3 zu Grunde liegt, auch umgekehrt werden. In den genannten Figuren liegt jeweils der Flüssigkeitsbehälter 5 auf Masse und es werden Signale (Eingangssignale (sᵢₙ(t) genannt) an den Fühler 3 angelegt. Beim Umkehren des Schaltungsprinzips würde der Fühler 3 auf Masse gelegt und es werden Signale (Eingangssignale (sᵢₙ(t) genannt) an den Flüssigkeitsbehälter 5 angelegt. In diesem Fall bedarf es unter Umständen gewisser Anpassungen auf Seiten der Schaltungen E und A.

Alternativ sind auch Schaltungen möglich, die sich nicht auf Masse beziehen, wie oben beschrieben. Eine solche alternative Schaltung kann beispielsweise einen kapazitiven Spannungsteiler in Form einer Messbrücke umfassen. Auch derartige Schaltungen dienen der Realisierung bzw. Implementierung der vorliegenden Erfindung.

**REFERENZLISTE:**

| | |
|---|---|
| Auswerteschaltung/-einheit | A |
| Zustellbewegung | B |
| Phasenverschiebung | Δϕ |
| Widerstandssprung | ΔR |
| Eingangssignalgenerator | E |
| Faktor | F |
| erster Wechselspannungsgenerator | G₁ |
| zweiter Wechselspannungsgenerator | G₂ |
| Wechselspannungsgenerator | G |
| Hochpassfilter | HP |
| Tiefpassfilter | TP |
| Kennung für Phasengrenze generell | KL |
| Kennung für Schaum | Ks |
| Kennung für Flüssigkeit | Kf |
| Messvorrichtung/-aufbau | M |
| erster Prozess | P₁ |
| zweiter Prozess | P₂ |
| dritter Prozess | P₃ |
| vierter Prozess | P₄ |
| Phasenwinkel | PH1, PH2 |
| Sinussignal | S |
| erstes Sinussignal | S₁ |
| zweites Sinussignal | S₂ |
| Spannungsaddierer | SA |
| Ausgangsignal | Sₒᵤₜ(t) |
| Erstes Ausgangsignal | Sₒᵤₜ₁(t) |
| zweites Ausgangsignal | sₒᵤₜ₂(t) |
| Eingangssignal | sᵢₙ(t) |
| Sprungfaktor | SF |
| Zeit | t |
| Verstärker | V |
| Flüssigkeit | 1 |
| Schaum | 2 |
| Fühler (Pipette) | 3 |
| Flüssigkeitsbehälter | 5 |
| zweiter Signalpfad | 6 |
| erster Signalpfad | 7 |
| dritter Signalpfad | 6' |
| vierter Signalpfad | 7' |
| Labor-Gerät | 100 |
| erste Frequenz | f₁ |
| zweite Frequenz | f₂ |
| erster Sprung (Eigenschaft des Ausgangssignals mit dem grösseren Sprung bei Kontaktierung von Schaum) | ΔX1 |
| zweiter Sprung (Eigenschaft des Ausgangssignals mit dem kleineren Sprung bei Kontaktierung von Schaum) | ΔX2 |
| Quotienten (der ersten Kapazitätssprung und der zweiten Kapazitätssprung) | Q |

## Patentansprüche

1. Verfahren zum Detektieren einer Phasengrenze und zum Unterscheiden, ob es sich um eine Luft/Flüssigkeits- oder eine Luft/Schaum-Phasengrenze handelt in einem Flüssigkeitsbehälter (5) eines Geräts (100) mittels einer kapazitiv arbeitenden Messvorrichtung (M) mit einem Fühler (3), der in dem Flüssigkeitsbehälter (5) auf und ab bewegt werden kann, wobei mindestens ein Ausgangsignal (sₒᵤₜ(t)) durch die Messvorrichtung (M) verarbeitet wird, das Verfahren umfassend die folgenden Schritte:
a. Ausführen einer Auf- oder Abwärtsbewegung (B) des Fühlers (3) in dem Flüssigkeitsbehälter (5);
b. Anlegen eines Eingangssignals (sᵢₙ(t)) mit einer ersten Frequenz (f₁) an den Fühler (3);
c. Anlegen des Eingangssignals (sᵢₙ(t)) mit einer zweiten Frequenz (f₂) an den Fühler (3), wobei die zweite Frequenz (f₂) und die erste Frequenz (f₁) unterschiedlich sind;
d. Im Rahmen eines ersten Prozesses (P1) - Auswerten des Ausgangssignals (sₒᵤₜ(t)), um einen ersten Sprung (ΔX1) des Ausgangssignals (sₒᵤₜ(t)) zu erkennen;
e. im Rahmen eines zweiten Prozesses (P2) - Auswerten des Ausgangssignals (sₒᵤₜ(t)), um einen zweiten Sprung (ΔX2) des Ausgangssignals (sₒᵤₜ(t)) zu erkennen;
**dadurch gekennzeichnet, dass** das Verfahren die folgenden, weiteren Schritte umfasst:
f. Vergleichen des ersten Sprungs (ΔX1) mit dem zweiten Sprung (ΔX2);
g. Falls das Vergleichen eine Vorgabe übersteigt, Ausgabe einer Kennung (Ks), die eine Kontaktierung des Fühlers (3) mit Schaum (2) in dem Flüssigkeitsbehälter (5) signalisiert.

2. Verfahren nach Anspruch 1, **dadurch gekennzeichnet, dass** im Schritt f. beim Vergleichen ein Quotienten (Q) des ersten Sprungs (ΔX1) und des zweiten Sprungs (ΔX2) ermittelt wird und dass im Schritt g. ein Faktor (F) als Vorgabe dient, wobei die Ausgabe der Kennung (Ks) erfolgt, falls der Quotient (Q) den Faktor (F) übersteigt.

3. Verfahren nach Anspruch 1 oder 2, **dadurch gekennzeichnet, dass** der Schritt e. oder f. oder g. nur durchgeführt wird, falls der erste Sprung (ΔX1) erkannt worden ist.

4. Verfahren nach Anspruch 2, **gekennzeichnet durch** den Schritt:
Falls der Quotient (Q) den Faktor (F) nicht übersteigt, Ausgabe einer Kennung (Kf), die eine Kontaktierung des Fühlers (3) mit Flüssigkeit (1) signalisiert.

5. Verfahren nach Anspruch 1 oder 2, **dadurch gekennzeichnet, dass** eine sprunghafte Änderung des Ausgangssignals (sₒᵤₜ(t)), die mindestens einen Sprungfaktor (SF) erreicht, als Sprung (ΔX1, ΔX2) erkannt wird.

6. Verfahren nach Anspruch 1 oder 2, **dadurch gekennzeichnet, dass:**
- ein erstes Sinussignal (S₁) mit der ersten Frequenz (f₁) im Rahmen des ersten Prozesses (P1) als Eingangssignal (sᵢₙ(t)) angelegt wird; und
- ein zweites Sinussignal (S₂) mit der zweiten Frequenz (f₂) im Rahmen des zweiten Prozesses (P2) als Eingangssignal (sᵢₙ(t)) angelegt wird.

7. Verfahren nach Anspruch 6, **dadurch gekennzeichnet, dass:**
- das erste Sinussignal (S₁) und das zweite Sinussignal (S₂) simultan als Eingangssignal (sᵢₙ(t)) überlagert angelegt werden; und
- das Ausgangssignal (sₒᵤₜ(t)) in eine - der ersten Frequenz (f₁) entsprechende - erste Ausgangssignalkomponente (sₒᵤₜ₁(t)) und eine - der zweiten Frequenz (f₂) entsprechende - zweite Ausgangssignalkomponente (sₒᵤₜ₂(t)) aufgeteilt wird;
- die erste Ausgangssignalkomponente (sₒᵤₜ₁(t)) im Rahmen des ersten Prozesses (P₁) und die zweite Ausgangssignalkomponente (sₒᵤₜ₂(t)) im Rahmen des zweiten Prozesses (P₂) - vorzugsweise simultan - ausgewertet werden.

8. Verfahren nach Anspruch 6, **dadurch gekennzeichnet, dass:**
- das erste Sinussignal (S₁) und das zweite Sinussignal (S₂) alternierend als Eingangssignal (sᵢₙ(t)) angelegt werden; und
- das Ausgangssignal (sₒᵤₜ(t)) entsprechend der ersten Frequenz (f₁) oder der zweiten Frequenz (f₂) alternierend im Rahmen des ersten Prozesses (P₁) oder des zweiten Prozesses (P₂) ausgewertet wird.

9. Verfahren nach einem der vorhergehenden Ansprüche, **dadurch gekennzeichnet, dass** die Auswertung des Ausgangssignals (sₒᵤₜ(t)) die Ermittlung einer Phasenverschiebung (Δϕ) einer komplexen Permittivität umfasst, die eine Kontaktierung des Fühlers (3) mit einer Flüssigkeit (1) unterhalb von Schaum (2) in dem Flüssigkeitsbehälter (5) signalisiert.

10. Verfahren nach einem der vorhergehenden Ansprüche, **dadurch gekennzeichnet, dass** nach Ausgabe der Kennung (Ks), die eine Kontaktierung des Fühlers (3) mit Schaum (2) signalisiert, die folgenden Schritte ausgeführt werden:
a. Ausführen einer weiteren Bewegung (B) des Fühlers (3) in die zuvor ausgeführte Bewegungsrichtung;
b. Im Rahmen eines vierten Prozesses (P₄) - Anlegen eines Eingangssignals (sᵢₙ(t)) an den Fühler (3) und Auswerten des Ausgangssignals (sₒᵤₜ(t)), um eine Schaum-Flüssigkeit Phasengrenze zu erkennen, und ggf. Ausgabe einer Kennung (Kf), die einen Übergang des Fühlers (3) von Schaum (2) in Flüssigkeit (1) signalisiert.

11. Verfahren nach Anspruch 10, **dadurch gekennzeichnet, dass** das Auswerten des Ausgangssignals (sₒᵤₜ(t)) im Rahmen des vierten Prozesses (P₄) die Auswertung oder Verarbeitung einer komplexen Permittivität umfasst.

12. Verfahren nach Anspruch 10, **dadurch gekennzeichnet, dass** beim Auswerten im Rahmen des vierten Prozesses (P₄) eine betragsmässige Differenz zweier Phasenwinkel (PH1, PH2) oder eine Phasenverschiebung (Δϕ) ermittelt wird, um dann eine Kennung (Kf) auszugeben, die einen Übergang des Fühlers (3) von Schaum (2) in Flüssigkeit (1) signalisiert.

13. Vorrichtung, die zur Ermittlung einer Phasengrenze in einem Flüssigkeitsbehälter (5), und zum Unterscheiden, ob es sich um eine Luft/Flüssigkeits- oder eine Luft/Schaum-Phasengrenze handelt, mit einer kapazitiv arbeitenden Messvorrichtung (M) ausgestattet ist, wobei die Vorrichtung einen bewegbaren Fühler (3), einen Eingangssignalgenerator (E) und eine Auswerteschaltung (A) umfasst, wobei der Eingangssignalgenerator (E) schaltungstechnisch mit dem Fühler (3) oder mit dem Flüssigkeitsbehälter (5) verbindbar ist und wobei die Auswerteschaltung (A) so schaltungstechnisch mit dem Fühler (3) oder mit dem Flüssigkeitsbehälter (5) verbindbar ist, dass ein Ausgangssignal (sₒᵤₜ(t)) durch die Auswerteschaltung (A) verarbeitbar ist, **dadurch gekennzeichnet, dass** die Auswerteschaltung (A)
- zum Auswerten des Ausgangssignals (sₒᵤₜ(t)) ausgelegt ist, um einen ersten Sprung (ΔX1) des Ausgangssignals (sₒᵤₜ(t)) und um einen zweiten Sprung (ΔX2) des Ausgangssignals (sₒᵤₜ(t)) zu erkennen;
- zum Vergleichen des ersten Sprungs (ΔX1) mit dem zweiten Sprung (ΔX2) ausgelegt ist;
- zur Ausgabe einer Kennung (Ks) ausgelegt ist, die eine Kontaktierung des Fühlers (3) mit Schaum (2) in dem Flüssigkeitsbehälter (5) signalisiert, wobei diese Kennung (Ks) ausgebbar ist falls der Vergleich eine Vorgabe übersteigt.

14. Vorrichtung nach Anspruch 13, **dadurch gekennzeichnet, dass** sie dazu ausgelegt ist beim Vergleichen einen Quotienten (Q) des ersten Sprungs (ΔX1) und des zweiten Sprungs (ΔX2) zu bilden und die Kennung (Ks) auszugeben, falls der Quotient (Q) einen Faktor (F) als Vorgabe übersteigt.

15. Vorrichtung nach Anspruch 13 oder 14, **dadurch gekennzeichnet, dass** der Eingangssignalgenerator (E) zum Bereitstellen zweier Signale (S₁, S₂) ausgelegt ist, die zum Erzeugen einer zusammengesetzten Wechselspannung zusammenfassbar sind, wobei vorzugsweise ein Spannungsaddierer (SA) zum Erzeugen einer zusammengesetzten Wechselspannung zum Einsatz kommt, die als Eingangssignal (sᵢₙ(t)) dient.

16. Vorrichtung nach Anspruch 13, 14 oder 15, **dadurch gekennzeichnet, dass** die Auswerteschaltung (A) eine Frequenzweiche (TP, HP) umfasst, die dazu ausgelegt ist das Ausgangssignal (sₒᵤₜ(t)) in ein erstes Ausgangssignal (sₒᵤₜ₁(t)) und ein zweites Ausgangssignal (sₒᵤₜ₂(t)) aufzutrennen, wobei das erste Ausgangssignal (sₒᵤₜ₁(t)) und das zweite Ausgangssignal (sₒᵤₜ₂(t)) durch die Auswerteschaltung (A) verarbeitbar sind.

17. Vorrichtung nach Anspruch 16, **dadurch gekennzeichnet, dass** der Eingangssignalgenerator (E) dazu ausgelegt ist die Kapazität des Fühlers (3) bei mehreren Frequenzen (f₁, f₂) bestimmen zu können.

18. Vorrichtung nach Anspruch 16 oder 17, **dadurch gekennzeichnet, dass** die Auswerteschaltung (A) dazu ausgelegt ist die Ermittlung einer Phasenverschiebung (Δϕ) einer komplexen Permittivität durchzuführen, die eine Kontaktierung des Fühlers (3) mit einer Flüssigkeit (1) unterhalb oder oberhalb von Schaum (2) in dem Flüssigkeitsbehälter (5) signalisiert.

## Claims

1. Method for detecting a phase boundary and discriminating whether it is an air-liquid or an air-foam phase boundary in a liquid container (5) of an apparatus (100) by means of a capacitively operating measuring device (M) having a sensor (3) which can be moved up and down in the liquid container (5), wherein at least one output signal (sₒᵤₜ(t)) is processed by the measuring device (M), the method comprising the following steps:
a) performing an upward or downward movement (B) of the sensor (3) in the liquid container (5);
b) applying an input signal (sᵢₙ(t)) having a first frequency (f₁) to the sensor (3);
c) applying the input signal (sᵢₙ(t)) having a second frequency (f₂) to the sensor (3), wherein the second frequency (f₂) and the first frequency (f₁) are different;
d) in the context of a first process (P1) - evaluating the output signal (sₒᵤₜ(t)) to detect a first jump (ΔX1) of the output signal (sₒᵤₜ(t));
e) in the context of a second process (P2) - evaluating the output signal (sₒᵤₜ(t)) to detect a second jump (ΔX2) of the output signal (sₒᵤₜ(t));
**characterized in that** the method comprises the following further steps:
f) comparing the first jump (ΔX1) with the second jump (ΔX2);
g) if the comparison exceeds a preset, output of an identifier (Ks) signalling contacting of the sensor (3) with foam (2) in the liquid container (5).

2. Method according to claim 1, **characterized in that** in step f) a quotient (Q) of the first jump (ΔX1) and the second jump (ΔX2) is determined during the comparison and **in that** in step g) a factor (F) serves as a preset, wherein the output of the identifier (Ks) takes place if the quotient (Q) exceeds the factor (F).

3. Method according to claim 1 or 2, **characterized in that** step e) or f) or g) is only carried out if the first jump (ΔX1) has been detected.

4. Method according to claim 2, **characterized by** the step:
if the quotient (Q) does not exceed the factor (F), output of an identifier (Kf) which signals a contacting of the sensor (3) with liquid (1).

5. Method according to claim 1 or 2, **characterized in that** a sudden change in the output signal (sₒᵤₜ(t)) which reaches at least one jump factor (SF) is recognized as a jump (ΔX1, ΔX2).

6. Method according to claim 1 or 2, **characterized in that:**
- a first sinusoidal signal (S₁) having the first frequency (f₁) is applied as input signal (sᵢₙ(t)) within the first process (P1); and
- a second sinusoidal signal (S₂) having the second frequency (f₂) is applied as input signal (sᵢₙ(t)) within the second process (P2).

7. Method according to claim 6, **characterized in that:**
- the first sinusoidal signal (S₁) and the second sinusoidal signal (S₂) are applied simultaneously in a superimposed manner as input signal (sᵢₙ(t)); and
- the output signal (sₒᵤₜ(t)) is divided into a first output signal component (sₒᵤₜ₁(t)), which corresponds to the first frequency (f₁), and a second output signal component (sₒᵤₜ₂(t)), which corresponds to the second frequency (f₂);
- the first output signal component (sₒᵤₜ₁(t)) is evaluated within the framework of the first process (P₁) and the second output signal component (sₒᵤₜ₂(t)) is evaluated within the framework of the second process (P₂), preferably simultaneously.

8. Method according to claim 6, **characterized in that:**
- the first sinusoidal signal (S₁) and the second sinusoidal signal (S₂) are applied alternately as input signal (sᵢₙ(t)); and
- the output signal (sₒᵤₜ(t)) is evaluated in accordance with the first frequency (f₁) or the second frequency (f₂) alternately within the framework of the first process (P₁) or the second process (P₂).

9. Method according to one of the preceding claims, **characterized in that** the evaluation of the output signal (sₒᵤₜ(t)) comprises the determination of a phase shift (Δϕ) of a complex permittivity which signals a contacting of the sensor (3) with a liquid (1) below foam (2) in the liquid container (5).

10. Method according to one of the preceding claims, **characterized in that** the following steps are carried out after output of the identifier (Ks) which signals a contacting of the sensor (3) with foam (2):
a) carrying out a further movement (B) of the sensor (3) in the previously performed direction of movement;
b) in the context of a fourth process (P₄) - applying an input signal (sᵢₙ(t)) to the sensor (3) and evaluating the output signal (sₒᵤₜ(t)) to detect a foam-liquid phase boundary, and optionally outputting an identifier (Kf) signalling a transition of the sensor (3) from foam (2) to liquid (1).

11. Method according to claim 10, **characterized in that** the evaluation of the output signal (sₒᵤₜ(t)) in the context of the fourth process (P₄) comprises the evaluation or processing of a complex permittivity.

12. Method according to claim 10, **characterized in that,** in the evaluation within the context of the fourth process (P₄), an absolute difference between two phase angles (PH1, PH2) or a phase shift (Δϕ) is determined, in order then to output an identifier (Kf) which signals a transition of the sensor (3) from foam (2) to liquid (1).

13. Device equipped with a capacitively operating measuring device (M) for determining a phase boundary in a liquid container (5) and for distinguishing whether it is an air-liquid or an air-foam phase boundary, wherein the device comprises a movable sensor (3), an input signal generator (E) and an evaluation circuit (A), wherein the input signal generator (E) can be connected by circuitry to the sensor (3) or to the liquid container (5), and wherein the evaluation circuit (A) can be connected by circuitry to the sensor (3) or to the liquid container (5) such that an output signal (sₒᵤₜ(t)) can be processed by the evaluation circuit (A), **characterized in that** the evaluation circuit (A)
- is adapted to evaluate the output signal (sₒᵤₜ(t)) to detect a first jump (ΔX1) of the output signal (sₒᵤₜ(t)) and a second jump (ΔX2) of the output signal (sₒᵤₜ(t));
- is adapted to compare the first jump (ΔX1) with the second jump (ΔX2);
- is adapted to output an identifier (Ks) signalling a contacting of the sensor (3) with foam (2) in the liquid container (5), wherein said identifier (Ks) can be output if the comparison exceeds a preset.

14. Device according to claim 13, **characterized in that** it is designed, during the comparison, to form a quotient (Q) of the first jump (ΔX1) and the second jump (ΔX2) and to output the identifier (Ks) if the quotient (Q) exceeds a factor (F) as a preset.

15. Device according to claim 13 or 14, **characterized in that** the input signal generator (E) is designed to provide two signals (S₁, S₂) which can be combined to generate a composite alternating voltage, wherein preferably a voltage adder (SA) is used to generate a composite alternating voltage which serves as the input signal (sᵢₙ(t)).

16. Device according to claim 13, 14 or 15, **characterized in that** the evaluation circuit (A) comprises a crossover (TP, HP) adapted to separate the output signal (sₒᵤₜ(t)) into a first output signal (sₒᵤₜ₁(t)) and a second output signal (sₒᵤₜ₂(t)), wherein the first output signal (sₒᵤₜ₁(t)) and the second output signal (sₒᵤₜ₂(t)) can be processed by the evaluation circuit (A).

17. Device according to claim 16, **characterized in that** the input signal generator (E) is designed to be able to determine the capacitance of the sensor (3) at a plurality of frequencies (f₁, f₂).

18. Device according to claim 16 or 17, **characterized in that** the evaluation circuit (A) is designed to carry out the determination of a phase shift (Δϕ) of a complex permittivity which signals a contacting of the sensor (3) with a liquid (1) below or above foam (2) in the liquid container (5).

## Revendications

1. Procédé pour détecter une limite de phase et pour distinguer s'il s'agit d'une limite de phase air/liquide ou air/mousse dans un récipient à liquide (5) d'un appareil (100) à l'aide d'un dispositif de mesure à fonctionnement capacitif (M) avec une sonde (3) qui peut être déplacée vers le haut et vers le bas dans le récipient à liquide (5), au moins un signal de sortie (sₒᵤₜ(t)) étant traité par le dispositif de mesure (M), le procédé comprenant les étapes suivantes consistant à :
a. déplacer vers le haut ou vers le bas (B) la sonde (3) dans le récipient à liquide (5) ;
b. appliquer un signal d'entrée (sᵢₙ(t)) avec une première fréquence (f₁) à la sonde (3) ;
c. appliquer le signal d'entrée (sᵢₙ(t)) avec une deuxième fréquence (f₂) à la sonde (3), la deuxième fréquence (f₂) et la première fréquence (f₁) étant différentes ;
d. dans le cadre d'un premier processus (P1) - analyser le signal de sortie (sₒᵤₜ(t)) pour détecter un premier saut (ΔX1) du signal de sortie (Sout(t)) ;
e. dans le cadre d'un deuxième processus (P2) - analyser le signal de sortie (sₒᵤₜ(t)) pour détecter un deuxième saut (ΔX2) du signal de sortie (sₒᵤₜ(t)) ;
**caractérisé en ce que** le procédé comprend les autres étapes suivantes consistant à :
f. comparer le premier saut (ΔX1) avec le deuxième saut (ΔX2) ;
g. si la comparaison dépasse une consigne, émettre un identificateur (Ks) qui signale un contact de la sonde (3) avec la mousse (2) dans le récipient à liquide (5).

2. Procédé selon la revendication 1, **caractérisé en ce qu'**à l'étape f. lors de la comparaison, il est déterminé un quotient (Q) du premier saut (ΔX1) et du deuxième saut (ΔX2), et **en ce qu'**à l'étape g. un facteur (F) sert de référence, l'émission de l'identificateur (Ks) intervenant si le quotient (Q) dépasse le facteur (F).

3. Procédé selon la revendication 1 ou 2, **caractérisé en ce que** l'étape e., f. ou g. n'est réalisée que si le premier saut (ΔX1) a été détecté.

4. Procédé selon la revendication 2, **caractérisé par** l'étape suivante : si le quotient (Q) ne dépasse pas le facteur (F), émission d'un identificateur (Kf) qui signale un contact de la sonde (3) avec le liquide (1).

5. Procédé selon la revendication 1 ou 2, **caractérisé en ce qu'**une modification brusque du signal de sortie (sₒᵤₜ(t)) qui atteint au moins un facteur de saut (SF), est détectée comme saut (ΔX1, ΔX2).

6. Procédé selon la revendication 1 ou 2, **caractérisé en ce que** :
- on applique un premier signal sinusoïdal (S₁) avec la première fréquence (f₁) dans le cadre du premier processus (P1) comme signal d'entrée (Sin(t)) ; et
- on applique un deuxième signal sinusoïdal (S₂) avec la deuxième fréquence (f₂) dans le cadre du deuxième processus (P2) comme signal d'entrée (Sin(t)).

7. Procédé selon la revendication 6, **caractérisé en ce que** :
- le premier signal sinusoïdal (S₁) et le deuxième signal sinusoïdal (S₂) sont appliqués simultanément de façon superposée comme signal d'entrée (Sin(t)) ; et
- le signal de sortie (sₒᵤₜ(t)) est divisé en un premier composant de signal de sortie (sₒᵤₜ₁(t)) - correspondant à la première fréquence (f₁) - et en un deuxième composant de signal de sortie (sₒᵤₜ₂(t)) - correspondant à la deuxième fréquence (f₂) ;
- le premier composant de signal de sortie (sₒᵤₜ₁(t)) dans le cadre du premier processus (P₁) et le deuxième composant de signal de sortie (sₒᵤₜ₂(t)) dans le cadre du deuxième processus (P₂) étant analysés, de préférence simultanément.

8. Procédé selon la revendication 6, **caractérisé en ce que** :
- le premier signal sinusoïdal (S₁) et le deuxième signal sinusoïdal (S₂) sont appliqués en alternance comme signal d'entrée (Sᵢₙ(t)) ; et
- le signal de sortie (sₒᵤₜ(t)) correspondant à la première fréquence (f₁) ou à la deuxième fréquence (f₂) est analysé en alternance dans le cadre du premier processus (P₁) ou du deuxième processus (P₂).

9. Procédé selon l'une des revendications précédentes, **caractérisé en ce que** l'analyse du signal de sortie (sₒᵤₜ(t)) comprend la détermination d'un décalage de phase (Δ_{ϕ}) d'une permittivité complexe qui signale un contact de la sonde (3) avec un liquide (1) sous la mousse (2) dans le récipient à liquide (5).

10. Procédé selon l'une des revendications précédentes, **caractérisé en ce que,** après l'émission de l'identificateur (Ks) qui signale un contact de la sonde (3) avec la mousse (2), on réalise les étapes suivantes :
a. réalisation d'un autre mouvement (B) de la sonde (3) dans le sens de déplacement réalisé précédemment ;
b. dans le cadre d'un quatrième processus (P₄) - application d'un signal d'entrée (sᵢₙ(t)) au niveau de la sonde (3) et analyse du signal de sortie (Sₒᵤₜ(t)), pour détecter une limite de phase mousse-liquide et le cas échéant émission d'un identificateur (Kf) qui signale le passage de la sonde (3) de la mousse (2) dans le liquide (1).

11. Procédé selon la revendication 10, **caractérisé en ce que** l'analyse du signal de sortie (sₒᵤₜ(t)) dans le cadre du quatrième processus (P₄) comprend l'analyse ou le traitement d'une permittivité complexe.

12. Procédé selon la revendication 10, **caractérisé en ce que,** lors de l'analyse dans le cadre du quatrième processus (P₄), on détermine une différence quantitative de deux angles de phase (PH1, PH2) ou un décalage de phase (Δ_{ϕ}) pour ensuite émettre un identificateur (Kf) qui signale le passage de la sonde (3) de la mousse (2) dans le liquide (1).

13. Dispositif conçu pour déterminer une limite de phase dans un récipient à liquide (5) et pour distinguer s'il s'agit d'une limite de phase air/liquide ou air/mousse, équipé d'un dispositif de mesure à fonctionnement capacitif (M), le dispositif comprenant une sonde mobile (3), un générateur de signal d'entrée (E) et un circuit d'analyse (A), le générateur de signal d'entrée (E) pouvant être raccordé par technique de circuits à la sonde (3) ou au récipient à liquide (5), et le circuit d'analyse (A) pouvant être raccordé par technique de circuits à la sonde (3) ou au récipient à liquide (5) de sorte qu'un signal de sortie (sₒᵤₜ(t)) peut être traité par le circuit d'analyse (A),
**caractérisé en ce que** le circuit d'analyse (A)
- est conçu pour analyser le signal de sortie (sₒᵤₜ(t)) pour détecter un premier saut (ΔX1) du signal de sortie (sₒᵤₜ(t)) et un deuxième saut (ΔX2) du signal de sortie (sₒᵤₜ(t)) ;
- est conçu pour comparer le premier saut (ΔX1) au deuxième saut (ΔX2) ;
- est conçu pour émettre un identificateur (Ks) qui signale un contact de la sonde (3) avec la mousse (2) dans le récipient à liquide (5), cet identificateur (Ks) pouvant être émis lorsque la comparaison dépasse une consigne.

14. Dispositif selon la revendication 13, **caractérisé en ce qu'il** est conçu pour former, lors de la comparaison, un quotient (Q) du premier saut (ΔX1) et du deuxième saut (ΔX2) et pour émettre l'identificateur (Ks) lorsque le quotient (Q) dépasse un facteur (F) comme consigne.

15. Dispositif selon la revendication 13 ou 14, **caractérisé en ce que** le générateur de signal d'entrée (E) est conçu pour fournir deux signaux (S₁, S₂) qui peuvent être regroupés pour produire une tension alternative composée, dans lequel on utilise de préférence un additionneur de tension (SA) pour produire une tension alternative composée qui sert de signal d'entrée (Sin(t)).

16. Dispositif selon la revendication 13, 14 ou 15, **caractérisé en ce que** le circuit d'analyse (A) comprend un diplexeur (TP, HP) qui est conçu pour séparer le signal de sortie (sₒᵤₜ(t)) en un premier signal de sortie (sₒᵤₜ₁(t)) et en un deuxième signal de sortie (Sₒᵤₜ₂(t)), le premier signal de sortie (sₒᵤₜ₁(t)) et le deuxième signal de sortie (sₒᵤₜ₂(t)) pouvant être traités par le circuit d'analyse (A).

17. Dispositif selon la revendication 16, **caractérisé en ce que** le générateur de signal d'entrée (E) est conçu pour pouvoir déterminer la capacité de la sonde (3) à plusieurs fréquences (f₁, f₂).

18. Dispositif selon la revendication 16 ou 17, **caractérisé en ce que** le circuit d'analyse (A) est conçu pour déterminer un décalage de phase (Δ_{ϕ}) d'une permittivité complexe qui signale un contact de la sonde (3) avec un liquide (1) en dessous ou au-dessus de la mousse (2) dans le récipient à liquide (5).
